# FASCICULE DE BREVET EUROPEEN

(11) **EP 2 217 933 B1**
(45) Date de publication et mention de la délivrance du brevet: **18.05.2011**
(21) Numéro de dépôt: 08854042.2
(22) Date de dépôt: 28.11.2008
(51) Int. Cl.: G01P 13/02

(54) **SONDE AERONAUTIQUE A RECHAUFFEUR INTEGRE**
LUFTFAHRTSONDE MIT INTEGRIERTEM HEIZELEMENT
AERONAUTICAL PROBE WITH INTEGRATED HEATER

(30) Priorité: 30.11.2007 FR 0708398
(43) Date de publication de la demande: 18.08.2010
(73) Titulaire: Thales, 92526 Neuilly Sur Seine (FR)
(72) Inventeur: PINEAU, Jean-Philippe, F-41190 Landes Le Gaulois (FR); LEDAIN, Bernard, F-92310 Sèvres (FR)
(74) Mandataire: Lucas, Laurent Jacques
(86) Numéro de dépôt international: PCT/EP2008/066446
(87) Numéro de publication internationale: WO 2009/068653

(56) Documents cités:
- EP-A- 0 100 715
- FR-A- 2 787 885
- US-A- 4 121 088
- US-A- 4 998 008

## Description

La présente invention concerne une sonde aéronautique à réchauffeur intégré. Elle concerne plus particulièrement une girouette de mesure de l'orientation du vent à réchauffeur intégré. Une telle girouette trouve une utilité particulière dans l'industrie aéronautique, où elle informe sur l'orientation du flux d'air incident par rapport à un aéronef, appelé vent relatif. Dans ce contexte, la girouette est plus communément appelée sonde d'incidence. La girouette selon l'invention peut néanmoins être utilisée dans d'autres domaines, en particulier en météorologie, notamment dans des conditions extrêmes de température et d'humidité.

La connaissance de l'orientation du vent relatif est nécessaire au pilotage d'un aéronef. Cette connaissance permet de calculer un paramètre d'incidence, d'où découle le calcul d'un paramètre critique : la portance. La connaissance de la portance de l'aéronef, à tout moment au cours du vol, est absolument nécessaire à la sécurité du vol. Cette connaissance est apportée en partie par une girouette. La girouette est un élément fixé sur la peau de l'aéronef. Elle comporte une embase tournante et une palette profilée s'orientant dans le sens du vent. L'embase tournante et la palette sont liées par une jonction. Elles sont par exemple en alliage métallique. La girouette est en liaison pivot autour d'un axe orthogonal à un plan tangent à la peau de l'aéronef. Comme toute sonde aéronautique, la girouette, et en particulier sa palette, doivent être réchauffées pour faire face aux conditions givrantes rencontrées pendant les vols. Le givrage déforme la surface externe calibrée de la palette, la déséquilibrant, et donc faussant la mesure de l'orientation du vent relatif et par suite le calcul de portance lié à cette orientation.

Pour garantir le dégivrage de la girouette, un élément chauffant allongé, appelé réchauffeur, est placé à l'intérieur de la girouette. Ce réchauffeur assure le réchauffage, depuis l'intérieur de la girouette, des surfaces extérieures de la girouette. Le réchauffeur peut être introduit soit par un bord de fuite de la palette, soit par l'embase tournante de la girouette. Le réchauffeur comporte des blocs de céramique formant une résistance de chauffage. Les blocs sont entourés de deux plaques conductrices, formant des électrodes pour le réchauffeur. Les plaques conductrices sont emboîtées, brasées ou collées sur les blocs de céramique. Pour des raisons de sécurité, la surface extérieure de la girouette ne doit pas être soumise à un potentiel électrique. Les blocs de céramique et les plaques conductrices sont par conséquent isolés électriquement de la palette et de l'embase tournante par un enrobage de polymère ou de résine ou par un film isolant électriquement.

Une telle isolation électrique des blocs de céramique et des plaques conductrices présente plusieurs inconvénients. Un premier inconvénient est que cette isolation électrique constitue également une barrière thermique entre les blocs de céramique chauffants et la palette de la girouette. Pour compenser cette perte de transmission d'énergie calorifique, les blocs de céramique doivent fonctionner à très hautes températures. Ces hautes températures imposent des contraintes de conception, notamment dans le choix du polymère, de la résine ou du film isolant qui doit résister à ces températures, et dans la liaison mécanique entre les plaques conductrices et les blocs de céramique. Ces hautes températures impliquent en outre une consommation électrique importante et, dans certains cas, un vieillissement prématuré des blocs de céramique.

Un inconvénient, lié à l'utilisation d'un enrobage de polymère ou de résine, est que cet enrobage est solidaire des blocs de céramique et des plaques conductrices, alors que les matériaux constituant ces différents éléments ont des coefficients de dilatation très différents. Ces différences engendrent des contraintes dans les liaisons mécaniques entre l'enrobage de polymère ou de résine et les blocs de céramique. Ces contraintes sont d'autant plus importantes que les températures de fonctionnement sont élevées. Il en résulte un phénomène de fatigue dû à l'enchainement de cycles thermiques et pouvant aboutir à la rupture des liaisons mécaniques. En cas de rupture, même partielle, l'isolation électrique peut être défaillante, la surface extérieure de la girouette étant par conséquent soumise à un potentiel électrique.

De même, la liaison par emboîtement, brasage ou collage entre les plaques conductrices et les blocs de céramique est soumise à des contraintes dues à la dilatation différentielle pouvant résulter dans la rupture de la liaison électrique entre les plaques conductrices et les blocs de céramique. Une telle rupture empêche le réchauffage et donc le dégivrage de la girouette. Le calcul de l'incidence et, par suite, de la portance, est alors faussé.

Un autre inconvénient, toujours lié à l'utilisation d'un enrobage de polymère ou de résine, est que cet enrobage doit être appliqué uniformément, sans quoi des contacts électriques risquent de se produire entre les électrodes et la palette. L'uniformité de l'enrobage est dépendante de nombreux paramètres, en particulier de la composition et de la température de l'enrobage lors de son application.

Un autre inconvénient du film isolant électriquement est que, bien qu'il présente en principe une épaisseur uniforme, il risque d'être détérioré lors de l'insertion du réchauffeur dans la palette. La palette peut alors être soumise à un potentiel électrique.

La demande de brevet EP 0 100 715 A décrit un capteur d'incidence comportant un dispositif de réchauffage formé d'un élément céramique à coefficient de température positif (CTP) placé entre deux électrodes. Le dispositif de réchauffage est inséré dans un logement du capteur d'incidence. La demande de brevet US 4 121 088 A décrit une sonde d'incidence comportant un réchauffeur inséré dans une fente. Le réchauffeur est constitué d'une pluralité d'éléments CTP. Le document FR 2 787 885 A décrit une girouette comportant un réchauffeur introduit dans la palette par l'embase de la girouette. Le réchauffeur comprend des blocs de céramique entourés de plaques conductrices ayant une fonction d'électrode.

Un but de l'invention est notamment de pallier tout ou partie des inconvénients précités. A cet effet, l'invention a pour objet une sonde aéronautique destinée à être montée sur la peau d'un aéronef et comportant un corps de sonde en saillie de la peau de l'aéronef et un réchauffeur permettant un dégivrage d'une surface extérieure du corps de sonde. Selon l'invention, le réchauffeur comporte deux électrodes autoporteuses et des éléments résistifs chauffants, chaque électrode étant formée d'un substrat isolant électriquement et d'une partie active électriquement formant une face de l'électrode considérée, chaque élément résistif étant en contact avec les faces des électrodes.

L'invention présente plusieurs avantages. Un premier avantage est la possibilité d'utiliser un isolant électrique, en l'occurrence les substrats, de coefficient de dilatation thermique sensiblement égal au coefficient de dilatation thermique des éléments résistifs. Le choix approprié du matériau des substrats, par exemple de la céramique, permet de diminuer, voire de supprimer, les phénomènes de fatigue dans les liaisons mécaniques entre les éléments résistifs et les électrodes. En particulier, les éléments résistifs et les électrodes peuvent être en liaison rigide sur toute leur surface de contact, ce qui améliore la conduction thermique et la conduction électrique.

Un deuxième avantage est la meilleure conductivité thermique des substrats. En particulier, les substrats peuvent être des éléments céramiques. La conductivité thermique des matériaux céramiques est de l'ordre de dix fois supérieure à celle des produits organiques. La chaleur est ainsi mieux dissipée depuis les éléments résistifs vers le corps de sonde. En d'autres termes, l'efficacité thermique est meilleure. Il en résulte une diminution de la température de fonctionnement des éléments résistifs. Cette diminution de température économise de l'énergie électrique, diminue les contraintes dans la liaison mécanique entre les électrodes et les éléments résistifs et augmente les possibilités de liaison entre les électrodes et les éléments résistifs. Tous ces points ont pour effet d'augmenter la fiabilité de la girouette.

Un troisième avantage est la réalisation d'une isolation électrique solide entre les éléments résistifs et le corps de sonde. Le risque de court-circuit, par exemple par perforation du film isolant, est ainsi éliminé. La fiabilité de l'isolation électrique dépend alors peu du processus de fabrication. Elle repose essentiellement sur la conception. Par ailleurs, les électrodes peuvent être réalisées avec des contraintes dimensionnelles très fortes. Le réchauffeur peut ainsi être inséré dans le corps de sonde avec un ajustement serré, limitant les risques de dissymétrie de réchauffage du corps de sonde.

L'invention sera mieux comprise et d'autres avantages apparaîtront à la lecture de la description détaillée d'un mode de réalisation donné à titre d'exemple, description faite en regard de dessins annexés qui représentent :
- la figure 1, une vue éclatée d'une sonde selon l'invention ;

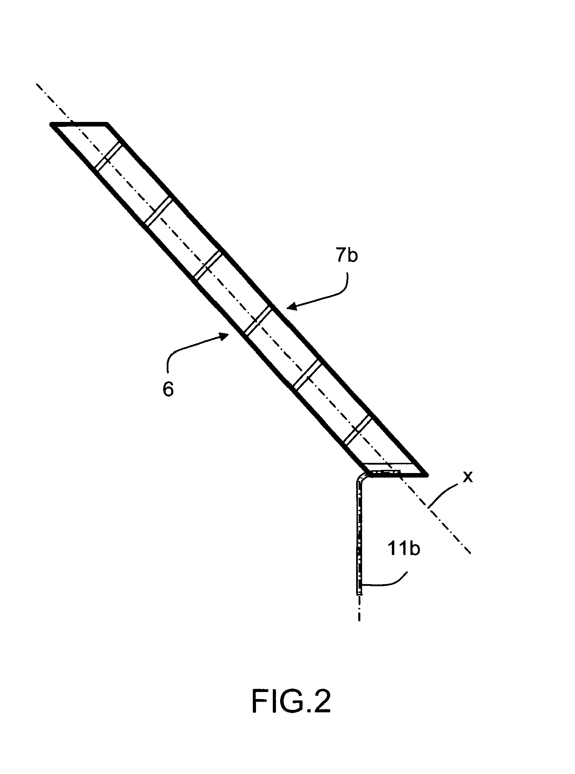

- la figure 2, une vue en coupe d'un réchauffeur de sonde selon l'invention.

La suite de la description est faite en référence à une girouette de mesure de l'orientation du vent. Cependant, l'invention s'applique tout aussi bien à toute sonde aéronautique destinée à être montée sur la peau d'un aéronef, telle qu'une sonde de pression ou une sonde de température.

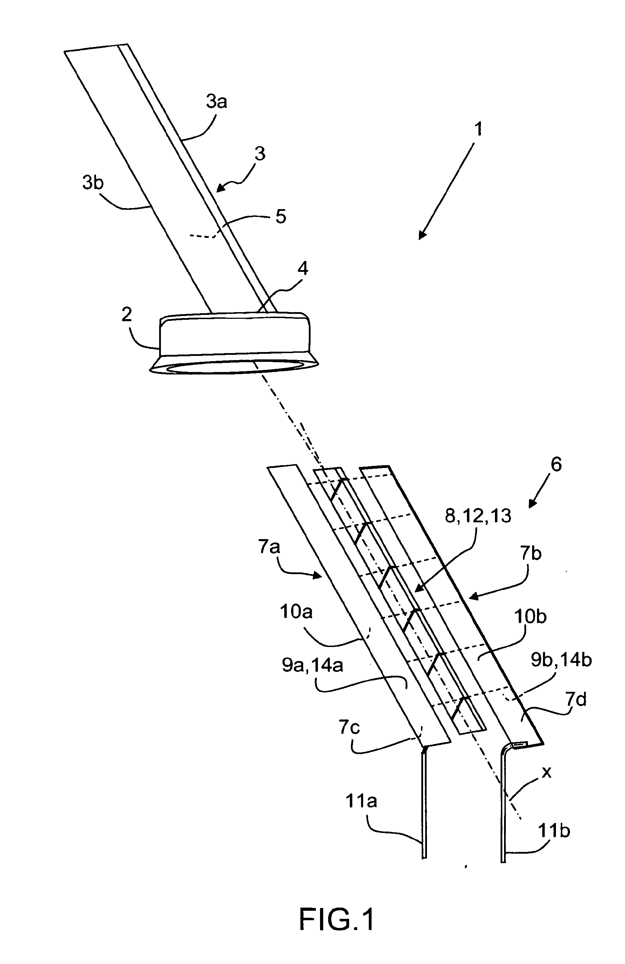

La figure 1 montre une girouette 1 de mesure de l'orientation du vent selon l'invention destinée à être montée sur la peau d'un aéronef. La girouette 1 comporte une embase tournante 2 et une palette 3 fixée à l'embase tournante 2 par une jonction 4. La palette 3 est par exemple soudée à l'embase tournante 2. L'embase tournante 2 et la palette 3 s'orientent dans le sens du vent et forment, avec la jonction 4, un corps de la sonde. Ce corps de sonde est en saillie de la peau de l'aéronef. L'embase tournant 2 et la palette 3 sont par exemple en alliage métallique. La palette 3 comprend un bord d'attaque 3a permettant la pénétration dans l'air de la palette 3 et un bord de fuite 3b. Elle comporte également une cavité 5 dans laquelle peut être introduit un réchauffeur 6 permettant un dégivrage d'une surface extérieure de la girouette 1, notamment la surface extérieure de la palette 3. Le réchauffeur 6 peut être introduit soit par le bord de fuite 3b, soit par l'embase tournante 2. Dans ce dernier cas, l'embase tournante 2 comprend une ouverture reliée à la cavité 5 permettant le passage du réchauffeur 6. Le réchauffeur 6 comporte deux électrodes 7a et 7b autoporteuses et des éléments résistifs 8 chauffants. Chaque électrode 7a et 7b est formée d'un substrat 9a ou 9b isolant électriquement et d'une partie active électriquement 10a ou 10b. Les électrodes 7a et 7b réalisent ainsi à la fois la fonction d'électrode et la fonction d'isolation de ces électrodes. Le substrat 9a ou 9b est rigide de façon à rendre les électrodes 7a et 7b autoporteuses. Les parties actives 10a et 10b forment respectivement une face 7c et 7d pour les électrodes 7a et 7b respectivement. Elles sont par exemple un dépôt métallique réalisé sur les substrats 9a et 9b. Les éléments résistifs 8 sont en contact avec les faces 7c et 7d des électrodes 7a et 7b respectivement. Les électrodes 7a et 7b sont par exemple alimentées en énergie électrique par l'intermédiaire de fils électriques 11 a et 11 b brasés sur les parties actives 10a et 10b des électrodes 7a et 7b.

La girouette 1 selon l'invention a notamment pour avantage que les éléments de la girouette 1 pouvant être soumis à un potentiel électrique sont isolés de la palette 3 par les substrats 9a et 9b. L'isolation électrique est ainsi réalisée de manière solide, le processus de fabrication intervenant peu sur la qualité de ce paramètre.

Selon une forme particulière de réalisation, le substrat 9a et 9b de chaque électrode 7a et 7b est un élément céramique. La céramique étant un meilleur conducteur thermique que le polymère ou la résine, le transfert de chaleur des éléments résistifs 8 vers la palette 3 est facilité. Pour une même température de la palette 3, les éléments résistifs 8 génèrent moins de chaleur. Cette diminution de génération de chaleur entraîne plusieurs conséquences. Une première conséquence est une diminution de la consommation électrique et/ou une diminution des dimensions des éléments résistifs 8. Dans le domaine aéronautique, la diminution de consommation électrique et la diminution de l'encombrement sont des paramètres importants de conception. Une deuxième conséquence est l'élargissement des choix possibles dans la liaison entre les éléments résistifs 8 et les électrodes 7a et 7b. Une troisième conséquence est l'augmentation de la fiabilité de la girouette 1, les contraintes de dilatation thermique dans la liaison entre les éléments résistifs 8 et les électrodes 7a et 7b diminuant avec la température.

Dans une forme particulière de réalisation, les éléments résistifs 8 sont des résistances à coefficient de température positif (CTP) 12. Les résistances CTP sont des thermistances dont la résistance augmente dans une plage de températures Δθ et diminue en dehors de cette plage. La plage de températures Δθ peut être déterminée lors de la conception des résistances. Selon l'invention, la plage de températures Δθ est déterminée de manière à inclure la plage de températures de fonctionnement de la girouette 1. L'utilisation de résistances CTP permet de faciliter la régulation de la température de la girouette 1. Lorsque la température diminue, la résistance diminue également. Selon la loi d'Ohm, pour une même tension appliquée aux bornes des résistances CTP 12, le courant augmente. Il en résulte une augmentation de la température des résistances CTP 12. Dans certains cas, il est possible de réguler complètement la température de la girouette 1 uniquement à l'aide des résistances CTP 12.

Dans une forme particulière de réalisation, les éléments résistifs 8 sont des blocs de céramique 13. L'utilisation de céramique pour les éléments résistifs 8 permet de réduire la différence entre le coefficient de dilatation des éléments résistifs 8 et celui des substrats 9a et 9b.

Avantageusement, les blocs de céramique 13 et les éléments céramiques 9a et 9b ont des coefficients de dilatation thermique sensiblement égaux. Par coefficients de dilatation sensiblement égaux, on entend des coefficients de dilatation tels que, dans la plage de températures de fonctionnement de la sonde, les deux éléments ne sont pas suffisamment déformés l'un par rapport à l'autre pour entraîner la fissuration de l'un des deux éléments ou de la liaison entre ces deux éléments. Cette égalité des coefficients de dilatation supprime les contraintes de dilatation thermique dans la liaison entre les blocs de céramique 13 et les éléments céramiques 9a et 9b. Cette suppression des contraintes augmente la durée de vie de la liaison et donc de la girouette 1.

Dans un mode particulier de réalisation, les éléments résistifs 8 ont une forme de pavé. En particulier, ils peuvent avoir une forme parallélépipédique rectangle. Ils sont disposés en parallèle entre les deux électrodes 7a et 7b, par exemple le long d'une ligne X. Le choix de la forme et du nombre d'éléments résistifs 8 permet de former un réchauffeur 6 s'adaptant à la cavité 5 de la palette 3.

Avantageusement, les substrats 9a et 9b sont des plaques céramiques 14a et 14b ayant par exemple une forme parallélépipédique.

Toujours avantageusement, les parties actives électriquement 10a et 10b ne recouvrent pas entièrement les faces 7c et 7d des électrodes 7a et 7b respectivement mais un espace périphérique est ménagé afin d'isoler les éléments résistifs 8 de la palette 3. L'espace périphérique peut par exemple comporter une protubérance périphérique formant un renfoncement dans lequel viennent se loger les éléments résistifs 8.

Selon un premier mode de réalisation, les éléments résistifs 8 sont brasés sur les faces 7c et 7d des électrodes 7a et 7b.

Selon un deuxième mode de réalisation, les éléments résistifs 8 sont collés sur les faces 7c et 7d des électrodes 7a et 7b à l'aide d'une colle conductrice électriquement.

Avantageusement, la brasure ou la colle est choisie de telle sorte que l'ensemble constitué des électrodes 7a et 7b et des éléments résistifs 8 résiste à une infinité de cycles de variation de températures en fonctionnement. En d'autres termes, les contraintes générées dans la liaison entre les éléments résistifs 8 et les électrodes 7a et 7b en raison de la différence de coefficients de dilatation thermique peuvent être appliquées une infinité de fois sans provoquer de rupture de la liaison. Ces contraintes s'entendent des contraintes générées lors des variations de températures normalement observées au cours de la vie de la girouette 1 pendant les vols de l'aéronef, de son décollage à son atterrissage, ainsi que pendant les périodes de roulage et de stockage. Le choix de la brasure ou de la colle permet une augmentation de la durée de vie de la girouette 1. Des exemples de colle sont les colles à base de silicone ou d'époxy chargées en particules métalliques.

Dans une forme particulière de réalisation, la palette 3 comprend une enveloppe formant la cavité 5 dans laquelle est introduit le réchauffeur 6. Le substrat 9a et 9b des électrodes 7a et 7b est alors en contact avec des parois internes de la cavité 5, en l'occurrence les parois internes de la palette 3. L'introduction du réchauffeur 6 peut être facilitée par l'application d'une graisse isolante électriquement sur la surface extérieure du réchauffeur 6.

Dans une autre forme de réalisation, les électrodes 7a et 7b forment directement la palette 3. Autrement dit, la forme de la palette 3 est obtenue directement par la forme des électrodes 7a et 7b. Cette forme de réalisation permet de diminuer le nombre d'éléments constituant la girouette 1 et par conséquent d'augmenter sa fiabilité.

## Revendications

1. Sonde aéronautique destinée à être montée sur la peau d'un aéronef et comportant un corps (2, 3, 4) de sonde en saillie de la peau de l'aéronef et un réchauffeur (6) permettant un dégivrage d'une surface extérieure du corps (2, 3, 4) de sonde, oú le réchauffeur (6) comporte deux électrodes (7a, 7b) autoporteuses et des éléments résistifs (8) chauffants. La sonde étant **caractérisée en ce que** chaque électrode (7a, 7b) est formée d'un substrat (9a, 9b) isolant électriquement et d'une partie active électriquement (10a, 10b) formant une face (7c, 7d) de l'électrode considérée (7a, 7b), chaque élément résistif (8) étant en contact avec les faces (7c, 7d) des électrodes (7a, 7b).

2. Sonde selon la revendication 1, **caractérisée en ce que** les parties actives électriquement (10a, 10b) sont un dépôt métallique (10a, 10b) réalisé sur les substrats (9a, 9b).

3. Sonde selon l'une des revendications 1 ou 2, **caractérisée en ce que** les éléments résistifs (8) sont des résistances à coefficient de température positif (12).

4. Sonde selon l'une des revendications précédentes, **caractérisée en ce que** les éléments résistifs (8) sont des blocs de céramique (13).

5. Sonde selon l'une des revendications précédentes, **caractérisée en ce que** le substrat (9a, 9b) de chaque électrode (7a, 7b) est un élément céramique.

6. Sonde selon les revendications 4 et 5, **caractérisée en ce que** les blocs de céramique (13) et les éléments céramiques (9a, 9b) des électrodes (7a, 7b) ont des coefficients de dilatation thermique sensiblement égaux.

7. Sonde selon l'une des revendications précédentes, **caractérisée en ce que** les éléments résistifs (8) ont une forme parallélépipédique et **en ce qu'**ils sont disposés en parallèle entre les deux électrodes (7a, 7b).

8. Sonde selon l'une des revendications précédentes, **caractérisée en ce que** le substrat (9a, 9b) de chaque électrode (7a, 7b) est une plaque céramique (14a, 14b).

9. Sonde selon l'une des revendications précédentes, **caractérisée en ce que** les éléments résistifs (8) sont brasés sur les faces (7c, 7d) des électrodes (7a, 7b).

10. Sonde selon l'une des revendications 1 à 8, **caractérisée en ce que** les éléments résistifs (8) sont collés sur les faces (7c, 7d) des électrodes (7a, 7b).

11. Sonde selon l'une des revendications 9 ou 10, **caractérisée en ce que** la brasure ou la colle est choisie de telle sorte que l'ensemble constitué des électrodes (7a, 7b) et des éléments résistifs (8) résiste à une infinité de cycles de variation de températures en fonctionnement.

12. Sonde selon l'une des revendications précédentes, **caractérisée en ce que** le corps (2, 3, 4) de sonde possède une cavité (5), le réchauffeur (6) étant inséré dans la cavité (5), le substrat (9a, 9b) des électrodes (7a, 7b) étant en contact avec des parois internes de la cavité (5).

13. Sonde selon l'une des revendications 1 à 12, **caractérisée en ce que** les électrodes (7a, 7b) du réchauffeur (6) forment le corps (2, 3, 4) de sonde.

14. Sonde selon l'une des revendications précédentes, **caractérisée en ce qu'**elle est une girouette de mesure de l'orientation du vent et comporte une embase tournante (2) et une palette (3) s'orientant dans le sens du vent et fixée par une jonction (4) à l'embase tournante (2), le réchauffeur (6) étant introduit dans la palette (3).

## Claims

1. An aeronautical probe designed to be mounted on the skin of an aircraft and comprising a probe body (2, 3, 4) protruding from the skin of the aircraft and a heater (6) for de-icing an outer surface of the probe body (2, 3, 4), wherein the heater (6) comprises two self-supporting electrodes (7a, 7b) and heating resistive elements (8); the probe being **characterized in that** each electrode (7a, 7b) is formed of an electrically insulating substrate (9a, 9b) and of an electrically active portion (10a, 10b) forming one face (7c, 7d) of the electrode in question (7a, 7b), each resistive element (8) being in contact with the faces (7c, 7d) of the electrodes (7a, 7b).

2. The probe as claimed in claim 1, **characterized in that** the electrically active portions (10a, 10b) are a metallic deposit (10a, 10b) made on the substrates (9a, 9b).

3. The probe as claimed in one of claims 1 or 2, **characterized in that** the resistive elements (8) are positive temperature coefficient resistors (12).

4. The probe as claimed in one of the preceding claims, **characterized in that** the resistive elements (8) are ceramic blocks (13).

5. The probe as claimed in any one of the preceding claims, **characterized in that** the substrate (9a, 9b) of each electrode (7a, 7b) is a ceramic element.

6. The probe as claimed in claims 4 and 5, **characterized in that** the ceramic blocks (13) and the ceramic elements (9a, 9b) of the electrodes (7a, 7b) have substantially equal thermal expansion coefficients.

7. The probe as claimed in one of the preceding claims, **characterized in that** the resistive elements (8) have a parallelepipedal shape and **in that** they are placed in parallel between the two electrodes (7a, 7b).

8. The probe as claimed in one of the preceding claims, **characterized in that** the substrate (9a, 9b) of each electrode (7a, 7b) is a ceramic plate (14a, 14b).

9. The probe as claimed in one of the preceding claims, **characterized in that** the resistive elements (8) are brazed onto the faces (7c, 7d) of the electrodes (7a, 7b).

10. The probe as claimed in one of claims 1 to 8, **characterized in that** the resistive elements (8) are bonded to the faces (7c, 7d) of the electrodes (7a, 7b).

11. The probe as claimed in one of claims 9 or 10, **characterized in that** the braze or the adhesive is chosen so that the assembly consisting of the electrodes (7a, 7b) and of the resistive elements (8) withstands an infinity of temperature-variation cycles in operation.

12. The probe as claimed in any one of the preceding claims, **characterized in that** the probe body (2, 3, 4) has a cavity (5), the heater (6) being inserted into the cavity (5), the substrate (9a, 9b) of the electrodes (7a, 7b) being in contact with the inner walls of the cavity (5).

13. The probe as claimed in one of claims 1 to 12, **characterized in that** the electrodes (7a, 7b) of the heater (6) form the probe body (2, 3, 4).

14. The probe as claimed in any one of the preceding claims, **characterized in that** it is a weather vane for measuring the orientation of the wind and comprises a rotating base (2) and a plate (3) that is oriented in the direction of the wind and attached by a join (4) to the rotating base (2), the heater (6) being inserted into the plate (3).

## Patentansprüche

1. Luftfahrtsonde, die dazu bestimmt ist, auf der Beplankung eines Luftfahrzeugs montiert zu sein und einen von der Beplankung des Luftfahrzeugs abstehenden Sondenkörper (2, 3, 4) umfasst und ein Heizelement (6), das eine Enteisung einer Außenfläche des Sondenkörpers (2, 3, 4) erlaubt, wobei das Heizelement (6) zwei selbsttragende Elektroden (7a, 7b) und resistive Heizelemente (8) aufweist, wobei die Sonde **dadurch gekennzeichnet ist, dass** jede Elektrode (7a, 7b) von einem elektrisch isolierenden Substrat (9a, 9b) und einem elektrisch aktiven Abschnitt (10a, 10b) gebildet wird, die eine Seite (7c, 7d) der entsprechenden Elektrode (7a, 7b) bilden, wobei jedes resistive Element (8) mit den Seiten (7c, 7d) der Elektroden (7a, 7b) in Kontakt ist.

2. Sonde nach Anspruch 1, **dadurch gekennzeichnet, dass** die elektrisch aktiven Abschnitte (10a, 10b) eine Metallauflage (10a, 10b) auf den Substraten (9a, 9b) sind.

3. Sonde nach einem der Ansprüche 1 oder 2, **dadurch gekennzeichnet, dass** die resistiven Elemente (8) Widerstände mit positivem Temperaturkoeffizienten (12) sind.

4. Sonde nach einem der vorangehenden Ansprüche, **dadurch gekennzeichnet, dass** die resistiven Elemente (8) Keramikblöcke (13) sind.

5. Sonde nach einem der vorangehenden Ansprüche, **dadurch gekennzeichnet, dass** das Substrat (9a, 9b) jeder Elektrode (7a, 7b) ein Keramikelement ist.

6. Sonde nach den Ansprüchen 4 und 5, **dadurch gekennzeichnet, dass** die Keramikblöcke (13) und die Keramikelemente (9a, 9b) der Elektroden (7a, 7b) etwa gleiche thermische Ausdehnungskoeffizienten haben.

7. Sonde nach einem der vorangehenden Ansprüche, **dadurch gekennzeichnet, dass** die resistiven Elemente (8) eine parallelepipedische Form haben und dass sie parallel zwischen den zwei Elektroden (7a, 7b) angeordnet sind.

8. Sonde nach einem der vorangehenden Ansprüche, **dadurch gekennzeichnet, dass** das Substrat (9a, 9b) jeder Elektrode (7a, 7b) eine Keramikplatte (14a, 14b) ist.

9. Sonde nach einem der vorangehenden Ansprüche, **dadurch gekennzeichnet, dass** die resistiven Elemente (8) auf den Seiten (7c, 7d) der Elektroden (7a, 7b) hartgelötet sind.

10. Sonde nach einem der Ansprüche 1 bis 8, **dadurch gekennzeichnet, dass** die resistiven Elemente (8) auf den Seiten (7c, 7d) der Elektroden (7a, 7b) geklebt sind.

11. Sonde nach einem der Ansprüche 9 oder 10, **dadurch gekennzeichnet, dass** das Hartlöten oder der Kleber derart ausgewählt sind, dass die aus den Elektroden (7a, 7b) und den resistiven Elementen (8) bestehende Gruppe im Betrieb einer Unendlichkeit von Temperaturschwankungszyklen widersteht.

12. Sonde nach einem der vorangehenden Ansprüche, **dadurch gekennzeichnet, dass** der Sondenkörper (2, 3, 4) einen Hohlraum (5) besitzt, wobei das Heizelement (6) in dem Hohlraum (5) eingesetzt ist, wobei das Substrat (9a, 9b) der Elektroden (7a, 7b) mit den Innenwänden des Hohlraums (5) im Kontakt ist.

13. Sonde nach einem der Ansprüche 1 bis 12, **dadurch gekennzeichnet, dass** die Elektroden (7a, 7b) des Heizelements (6) den Sondenkörper (2, 3, 4) bilden.

14. Sonde nach einem der vorangehenden Ansprüche, **dadurch gekennzeichnet, dass** sie eine Fahne zum Messen der Windrichtung ist und eine drehende Basis (2) und einen Flügel (3) aufweist, der sich in Richtung des Windes ausrichtet und mit einer Verbindung (4) an der Drehbasis (2) befestigt ist, wobei das Heizelement (6) in dem Flügel (3) integriert ist.
